# EUROPÄISCHE PATENTANMELDUNG

(11) **EP 2 224 526 A1**
(43) Veröffentlichungstag der Anmeldung: **01.09.2010**
(21) Anmeldenummer: 10153322.2
(22) Anmeldetag: 11.02.2010
(51) Int. Cl.: H01M 8/02

(54) **Verfahren zur Herstellung einer elektrisch isolierenden Dichtungsanordnung und Dichtungsanordnung zum Abdichten zwischen zwei Bauteilen eines Brennstoffzellenstacks**

(30) Priorität: 12.02.2009 DE 102009008717
(71) Anmelder: ElringKlinger AG, 72581 Dettingen (DE)
(72) Erfinder: Kiefer, Thomas, 72574, Bad Urach (DE); Maier, Uwe, 72760, Reutlingen (DE)
(74) Vertreter: Hoeger, Stellrecht & Partner Patentanwälte

(57) **Zusammenfassung**

Um ein Verfahren zur Herstellung einer elektrisch isolierenden Dichtungsanordnung zum Abdichten zwischen zwei Bauteilen eines Brennstoffzellenstacks zu schaffen, wird ein Verfahren zur Herstellung einer elektrisch isolierenden Dichtungsanordnung zum Abdichten zwischen zwei Bauteilen eines Brennstoffzellenstacks vorgeschlagen, welches folgende Verfahrensschritte umfasst:
- Erzeugen eines Dichtelements durch folgende Verfahrensschritte:
a) Bereitstellen mindestens eines von den abzudichtenden Bauteilen verschiedenen Trägerelements;
b) Erzeugen mindestens einer Dünnschicht, welche ein Glasmaterial und/oder ein Keramikmaterial umfasst, durch zumindest teilweises Eintauchen des mindestens einen Trägerelements in ein flüssiges Ausgangsmaterial und/oder durch Aufspritzen eines flüssigen Ausgangsmaterials auf zumindest einen Teil des mindestens einen Trägerelements;

- Einbringen des erzeugten Dichtelements zwischen die abzudichtenden Bauteile des Brennstoffzellenstacks.

## Beschreibung

Die vorliegende Erfindung betrifft ein Verfahren zur Herstellung einer elektrisch isolierenden Dichtungsanordnung zum Abdichten zwischen zwei Bauteilen eines Brennstoffzellenstacks.

Die Herstellung geeigneter Dichtungssysteme ist ein Schwerpunkt bei der Entwicklung von Hochtemperatur-Brennstoffzellensystemen (sogenannten SOFC-Brennstoffzellen). Solche Dichtungssysteme müssen hohen Anforderungen an die Gasdichtigkeit, elektrische Isolation, chemische Stabilität und Toleranz gegenüber mechanischer Beanspruchung (insbesondere beim Thermozyklieren) genügen.

Es ist bereits bekannt, zur Abdichtung in Brennstoffzellensystemen Glaslotdichtungen einzusetzen. Solche Glaslotdichtungen zeigen eine gute Gasdichtigkeit, elektrische Isolation und chemische Beständigkeit. Das Glaslot wird beim Fügezyklus weich, bevor es kristallisiert und aushärtet. Durch keramische Abstandshalter kann der Dichtspalt der Glaslotdichtung eingestellt werden. Übliche Dicken liegen dabei im Bereich von 300 µm +/- 50 µm.

Solche Glastlotdichtungen zeigen aber bei den verwendeten relativ hohen Schichtdicken nur geringe Toleranzen gegenüber mechanischer Beanspruchung beim Thermozyklieren, bedingt durch die schlechte Wärmeleitfähigkeit und das spröde Verhalten des Werkstoffes.

Ferner ist es bekannt, zur Abdichtung in Brennstoffzellensystemen Metalllotdichtungen einzusetzen. Solche Metalllotdichtungen weisen besonders bei der Thermozyklierung aufgrund ihres duktilen Verhaltens Vorteile auf. Das Metalllot ist jedoch als elektrischer Isolator ungeeignet, weshalb eine zusätzliche Isolationsschicht vorgesehen werden muss. Es ist beispielsweise bekannt, als Isolationsschicht eine im Vakuumplasmaspritzverfahren hergestellte Aluminium-Magnesium-Spinell-Schicht zu verwenden.

Die Herstellung einer solchen Isolationsschicht mittels des Vakuumplasmaspritzverfahrens ist jedoch ein aufwendiger und kostenintensiver Prozessschritt. Aufgrund der herstellungsbedingten Toleranzen müssen entsprechend hohe Sicherheitsfaktoren gewählt werden, was in einer hohen Schichtdicke der Isolationsschicht resultiert, womit eine erhöhter Materialverbrauch verbunden ist. Außerdem induziert eine dickere Isolationsschicht des Aluminium-Magnesium-Spinells, welcher einen anderen thermischen Ausdehnungskoeffizienten aufweist als die in der Brennstoffzelleneinheit verwendeten Stahlmaterialien, Eigenspannungen. Diese Eigenspannungen können Risse und damit Undichtigkeiten im Brennstoffzellensystem verursachen.

Der vorliegenden Erfindung liegt die Aufgabe zugrunde, ein Verfahren zur Herstellung einer elektrisch isolierenden Dichtungsanordnung zum Abdichten zwischen zwei Bauteilen eines Brennstoffzellenstacks zu schaffen, mittels welchem eine im Betrieb des Brennstoffzellenstacks langzeitstabile Dichtungsanordnung mit guter Gasdichtigkeit und guter elektrischer Isolationsfähigkeit herstellbar ist.

Diese Aufgabe wird erfindungsgemäß durch ein Verfahren zur Herstellung einer elektrisch isolierenden Dichtungsanordnung zum Abdichten zwischen zwei Bauteilen eines Brennstoffzellenstacks gelöst, welches folgende Verfahrensschritte umfasst:
- Erzeugen eines Dichtelements durch folgende Verfahrensschritte:
   a) Bereitstellen mindestens eines von den abzudichtenden Bauteilen verschiedenen Trägerelements;
   b) Erzeugen mindestens einer Dünnschicht, welche ein Glasmaterial und/oder ein Keramikmaterial umfasst, durch zumindest teilweises Eintauchen des mindestens einen Trägerelements in ein flüssiges Ausgangsmaterial und/oder durch Aufspritzen eines flüssigen Ausgangsmaterials auf zumindest einen Teil des mindestens einen Trägerelements;
- Einbringen des erzeugten Dichtelements zwischen die abzudichtenden Bauteile des Brennstoffzellenstacks.

Der vorliegenden Aufgabe liegt das Konzept zugrunde, zur Erzeugung der elektrischen Isolationswirkung der Dichtungsanordnung ein von den beiden abzudichtenden Bauteilen des Brennstoffzellenstacks separat hergestelltes Dichtelement zu verwenden, an dem mindestens eine bei der Betriebstemperatur des Brennstoffzellenstacks (von beispielsweise ungefähr 800°C) elektrisch isolierende Isolationsschicht als eine Dünnschicht aus Glas, aus Glas/Keramik oder aus Keramik ausgebildet ist.

Dabei wird als eine "Dünnschicht" im Rahmen dieser Beschreibung und der beigefügten Ansprüche eine Schicht mit einer Schichtdicke von höchstens ungefähr 100 µm angesehen.

Durch die Verwendung einer solch geringen Schichtdicke wird die mechanische Stabilität der als Dünnschicht ausgebildeten Isolationsschicht beim Thermozyklieren deutlich gegenüber einer herkömmlichen Glaslotschicht verbessert.

Durch das Eintauchen des mit der Dünnschicht zu versehenden Trägerelements in das flüssige Ausgangsmaterial und/oder durch Aufspritzen des flüssigen Ausgangsmaterials auf das mit der Dünnschicht zu versehende Trägerelement wird die zu beschichtende Oberfläche des betreffenden Trägerelements glasiert und mit einer dünnen Schicht des Ausgangsmaterials versehen. Die beiden abzudichtenden Bauteile des Brennstoffzellenstacks sind vorzugsweise metallische Bauteile, die insbesondere aus einem Stahlmaterial gebildet sein können.

Die Dicke der Dünnschicht beträgt vorzugsweise höchstens ungefähr 50 µm.

Um eine ausreichende elektrische Isolationswirkung zu gewährleisten, beträgt die Dicke der Dünnschicht vorzugsweise mindestens ungefähr 0,5 µm, insbesondere mindestens ungefähr 5 µm.

Bei einer bevorzugten Ausgestaltung der Erfindung ist vorgesehen, dass ein ringförmig geschlossenes Dichtelement erzeugt wird, welches im montierten Zustand des Brennstoffzellenstacks längs der abzudichtenden Dichtflächen der beiden abzudichtenden Bauteile des Brennstoffzellenstacks verläuft.

Insbesondere kann vorgesehen sein, dass das Dichtelement als ein, beispielsweise ungefähr rechteckiger, Dichtrahmen ausgebildet ist.

Grundsätzlich kann vorgesehen sein, dass das fertige Dichtelement zur Herstellung der elektrisch isolierenden Dichtungsanordnung lediglich zwischen die beiden abzudichtenden Bauteile des Brennstoffzellenstacks eingelegt wird, wobei dann die beiden abzudichtenden Bauteile mittels einer geeigneten Verspannungsvorrichtung des Brennstoffzellenstacks im Betrieb des Brennstoffzellenstacks so gegeneinander verspannt werden, dass durch eine ausreichende Flächenpressung an den Außenseiten des Dichtelements eine gasdichte Abdichtung zwischen dem Dichtelement einerseits und den angrenzenden abzudichtenden Bauteilen andererseits erzielt wird.

Alternativ oder ergänzend hierzu kann vorgesehen sein, dass das Dichtelement an mindestens einem der abzudichtenden Bauteile festgelegt wird.

Insbesondere kann das Dichtelement durch Verlötung und/oder durch Verschweißung und/oder durch einen Diffusionsvorgang und/oder durch eine chemische Reaktion an mindestens einem der abzudichtenden Bauteile festgelegt werden.

Bei einer bevorzugten Ausgestaltung der Erfindung ist vorgesehen, dass mindestens eines der beiden abzudichtenden Bauteile, vorzugsweise beide abzudichtenden Bauteile, aus einem metallischen Material, insbesondere aus einem Stahlmaterial, gebildet sind.

Ferner ist vorzugsweise vorgesehen, dass mindestens ein Trägerelement aus einem metallischen Material verwendet wird.

Das Trägerelement kann insbesondere aus demselben metallischen Material gebildet sein wie eines der beiden abzudichtenden Bauteile bzw. wie beide abzudichtenden Bauteile.

Um die elektrische Isolationswirkung des Dichtelements bei der Betriebstemperatur des Brennstoffzellenstacks zu verbessern, kann vorgesehen sein, dass das Dichtelement mit mehreren, durch jeweils ein Trägerelement voneinander getrennten Dünnschichten erzeugt wird.

Ferner kann vorgesehen sein, dass das Dichtelement aus mehreren, durch jeweils eine dazwischen liegende Schicht voneinander getrennte Trägerelemente erzeugt wird, wodurch die mechanische Stabilität des Dichtelements erhöht wird.

Ein zusätzliches Trägerelement des Dichtelements kann insbesondere durch Versintern mit einer bereits vorher gebildeten Dünnschicht des Dichtelements fest verbunden werden.

Das Dichtelement kann so erzeugt werden, dass mindestens eine der im montierten Zustand der Dichtungsanordnung den abzudichtenden Bauteilen zugewandten Außenflächen des Dichtelements durch eine Dünnschicht gebildet wird.

Ferner kann vorgesehen sein, dass beide der im montierten Zustand der Dichtungsanordnung den abzudichtenden Bauteilen zugewandten Außenflächen des Dichtelements durch eine Dünnschicht gebildet werden.

Alternativ hierzu kann vorgesehen sein, dass das Dichtelement so erzeugt wird, dass mindestens eine der im montierten Zustand der Dichtungsanordnung den abzudichtenden Bauteilen zugewandten Außenflächen des Dichtelements durch ein Trägerelement gebildet wird.

Insbesondere dann, wenn das Dichtelement durch Verlötung mit mindestens einem der abzudichtenden Bauteile verbunden wird, kann es von Vorteil sein, wenn zwischen dem metallischen Lot und dem Material der Dünnschicht ein Trägerelement angeordnet ist, welches verhindert, dass das metallische Lot und das Material der Dünnschicht direkt miteinander in Kontakt kommen und dadurch in abträglicher Weise miteinander in Wechselwirkung treten.

Insbesondere kann vorgesehen sein, dass das Dichtelement so erzeugt wird, dass beide der im montierten Zustand der Dichtungsanordnung den abzudichtenden Bauteilen zugewandten Außenflächen des Dichtelements durch ein Trägerelement gebildet werden.

Insbesondere wenn das Dichtelement durch Verlötung an mindestens einem der abzudichtenden Bauteile festgelegt wird und mindestens eine der im montierten Zustand der Dichtungsanordnung den abzudichtenden Bauteilen zugewandten Außenflächen des Dichtelements durch eine Dünnschicht gebildet wird, ist es von Vorteil, wenn das erfindungsgemäße Verfahren den folgenden weiteren Verfahrensschritt umfasst:
- Erzeugen mindestens einer Benetzungswinkelbegrenzungsschicht an mindestens einer der im montierten Zustand der Dichtungsanordnung den abzudichtenden Bauteilen zugewandten Außenflächen des Dichtelements.

Diese von der Lotschicht verschiedene Benetzungswinkelbegrenzungsschicht grenzt in der fertigen Dichtungsanordnung vorzugsweise direkt an die Lotschicht an.

Eine solche Benetzungswinkelbegrenzungsschicht umfasst vorzugsweise ein Oxidkeramikmaterial, wobei das Oxidkeramikmaterial beispielsweise Kupferoxid, Aluminiumoxid, Titanoxid, Zirkoniumoxid und/oder Yttrium-stabiliertes Zirkoniumdioxid umfassen kann.

Vorzugsweise wird die Benetzungswinkelbegrenzungsschicht aus einer CuO-Paste erzeugt.

Um die chemische Beständigkeit der Dünnschicht zu erhöhen und gegebenenfalls eventuelle Wechselwirkungen mit einem metallischen Lot bei der Verlötung des Dichtelements mit den beiden abzudichtenden Bauteilen zu vermindern, ist es günstig, wenn das erfindungsgemäße Verfahren als weiteren Verfahrensschritt eine Wärmebehandlung mindestens einer erzeugten Dünnschicht umfasst, bei welcher das Material der Dünnschicht zumindest teilweise aufgeschmolzen wird und zumindest teilweise kristallisiert.

Bei der teilweisen Kristallisation der Dünnschicht bleiben amorphe Restglasphasen bestehen, so dass eine teilweise aus Glas und teilweise aus keramischem Material bestehende Dünnschicht erzeugt wird.

Eine solche Wärmbehandlung zur teilweisen Auskristallisation der Dünnschicht ist besonders vorteilhaft, wenn die in dieser Weise behandelte Dünnschicht bei der späteren Verbindung des Dichtelements mit den abzudichtenden Bauteilen in direkten Kontakt mit einem metallischen Lot kommt.

Um für die Dünnschicht ein besonders geringes Spaltmaß einhalten zu können, ist es günstig, wenn die erzeugte Dünnschicht Partikel enthält, welche als bei der Betriebstemperatur des Brennstoffzellenstacks elektrisch isolierende Abstandshalter dienen.

Insbesondere kann vorgesehen sein, dass die erzeugte Dünnschicht Partikel enthält, welche ein Oxidkeramikmaterial umfassen.

Wenn das Ausgangsmaterial für die Dünnschicht in den flüssigen Zustand überführt wird, um das Trägerelement in das flüssige Ausgangsmaterial eintauchen und/oder um das flüssige Ausgangsmaterial auf zumindest einen Teil des Trägerelements aufspritzen zu können, bleiben diese Partikel im festen Zustand, so dass sie als Abstandshalter zur Einstellung einer Mindestdicke der erzeugten Dünnschicht dienen können.

Vorzugsweise umfasst das Oxidkeramikmaterial ein Metalloxidmaterial, wobei das Metalloxidmaterial als Metallkationen insbesondere Al, Zr und/oder Mg enthalten kann.

Der mittlere Durchmesser der Partikel liegt vorzugsweise bei ungefähr 10 µm bis ungefähr 100 µm.

Das Glasmaterial und/oder das Keramikmaterial, welches in dem flüssigen Ausgangsmaterial enthalten ist, kann insbesondere ein Glas des Systems BaO - CaO - SiO₂, ein Glas des Systems BaO - CaO - SiO₂ - Al₂O₃ und/oder ein Glas des Systems BaO - CaO - SiO₂ - Al₂O₃ - B₂O₃ umfassen.

Wenn das Dichtelement mittels eines metallischen Lotes mit mindestens einem der abzudichtenden Bauteile verlötet wird, kann das metallische Lot in einem einzigen Arbeitsgang, als Legierung, auf das Dichtelement und/oder auf das abzudichtende Bauteil aufgetragen und/oder, beispielsweise als Lötfolie, zwischen das Dichtelement und das Bauteil eingebracht werden.

Das Auftragen des metallischen Lots kann beispielsweise mittels eines Dispensers, mittels eines Musterdruckverfahrens (insbesondere eines Siebdruckverfahrens), galvanisch oder durch Plattieren mit einer Folie aus dem metallischen Lot erfolgen.

Verschiedene Bestandteile des Lotes können auch durch sequentielle Beschichtung, in verschiedenen aufeinanderfolgenden Beschichtungsvorgängen, auf das Dichtelement und/oder auf das abzudichtende Bauteil aufgebracht werden.

Die Verlötung des Dichtelements mit mindestens einem der abzudichtenden Bauteile mittels eines metallischen Lotes kann beispielsweise durch einen herkömmlichen Lotprozess in einem Ofen und/oder durch Induktionslöten erfolgen.

Die Verwendung elektrisch isolierender Abstandshalter ist besonders günstig, wenn mindestens eine Dünnschicht des Dichtelements durch eine metallische Beschichtung, insbesondere ein metallisches Trägerelement, von dem metallischen Lot getrennt ist.

Die vorliegende Erfindung betrifft ferner eine Dichtungsanordnung zum Abdichten zwischen zwei Bauteilen eines Brennstoffzellenstacks.

Der vorliegenden Erfindung liegt die weitere Aufgabe zugrunde, eine Dichtungsanordnung zum Abdichten zwischen zwei Bauteilen eines Brennstoffzellenstacks zu schaffen, welche im Betrieb des Brennstoffzellenstacks langzeitstabil ist und eine gute Gasdichtigkeit und eine gute elektrische Isolationsfähigkeit aufweist.

Diese Aufgabe wird erfindungsgemäß durch eine Dichtungsanordnung zum Abdichten zwischen zwei Bauteilen eines Brennstoffzellenstacks gelöst, welche folgendes umfasst:
ein separat von den Bauteilen hergestelltes und im montierten Zustand der Dichtungsanordnung zwischen den abzudichtenden Bauteilen angeordnetes Dichtelement,
das mindestens ein Trägerelement und mindestens eine elektrisch isolierende Dünnschicht, welche ein Glasmaterial und/oder ein Keramikmaterial umfasst und durch zumindest teilweises Eintauchen des Trägerelements in ein flüssiges Ausgangsmaterial und/oder durch Aufspritzen eines flüssigen Ausgangsmaterials auf zumindest einen Teil des Trägerelements erzeugt ist,
umfasst.

Die erfindungsgemäße Dichtungsanordnung umfasst somit ein separat von den abzudichtenden Bauteilen gebildetes Dichtelement, das mit einer als Dünnschicht ausgebildeten, bei der Betriebstemperatur des Brennstoffzellenstacks (von beispielsweise ungefähr 800°C) elektrisch isolierenden Isolationsschicht versehen ist.

Insbesondere dann, wenn das Dichtelement durch Verlötung mittels eines metallischen Lotes mit mindestens einem der abzudichtenden Bauteile verbunden ist, vereinigt die erfindungsgemäße Dichtungsanordnung die Vorteile von Glaslotdichtungen und Metalllotdichtungen.

Dabei kann mindestens eine Dünnschicht durch Glasieren mindestens eines Trägerelements des Dichtelements mittels eines Tauchvorgangs oder eines Spritzvorgangs erzeugt werden.

Die erfindungsgemäße Dichtungsanordnung eignet sich insbesondere zur Verwendung in einer Hochtemperatur-Brennstoffzelle, insbesondere einer SOFC (Solid Oxide Fuel Cell), mit einer Betriebstemperatur von beispielsweise mindestens 600°C.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer Dichtungsanordung für eine Brennstoffzelleneinheit, welche zwei abzudichtende Bauteile, ein zwischen den beiden abzudichtenden Bauteilen angeordnetes Dichtelement mit einem Trägerelement und einer elektrisch iso- lierenden Dünnschicht sowie eine das Trägerelement des Dicht- elements mit einem ersten der abzudichtenden Bauteile verbin- dende Lotschicht und eine die Dünnschicht des Dichtelements mit einem zweiten der abzudichtenden Bauteile verbindende Lot- schicht umfasst;
- Fig. 2: einen schematischen Schnitt durch das Dichtelement der Dich- tungsanordnung aus Fig. 1, welches separat von den beiden ab- zudichtenden Bauteilen hergestellt wird;
- Fig. 3: eine schematische Draufsicht von unten auf das rahmenförmige Dichtelement aus Fig. 2, mit der Blickrichtung in Richtung des Pfeiles 3 in Fig. 2;
- Fig. 4: einen schematischen Schnitt durch eine zweite Ausführungsform einer Dichtungsanordnung, welche ein Dichtelement mit zwei Trä- gerelementen und einer dazwischen angeordneten elektrisch iso- lierenden Dünnschicht umfasst;
- Fig. 5: einen schematischen Schnitt durch das Dichtelement der Dich- tungsanordnung aus Fig. 4;
- Fig. 6: einen schematischen Schnitt durch eine dritte Ausführungsform einer Dichtungsanordnung, welche ein Dichtelement mit zwei elektrisch isolierenden Dünnschichten und einem dazwischen an- geordneten Trägerelement umfasst;
- Fig. 7: einen schematischen Schnitt durch das Dichtelement der Dich- tungsanordnung aus Fig. 6;
- Fig. 8: einen schematischen Schnitt durch eine vierte Ausführungsform eines Dichtelements, das eine Sandwich-Struktur mit zwei außen- liegenden Trägerelementen und einem mittigen Trägerelement sowie zwei zwischen jeweils einem außenliegenden Trägerelement und dem mittigen Trägerelement angeordnete elektrisch isolie- rende Dünnschichten umfasst;
- Fig. 9: einen schematischen Schnitt durch eine fünfte Ausführungsform eines Dichtelements mit einer Sandwich-Struktur, welches zwei außenliegende elektrisch isolierende Dünnschichten und eine mittige elektrisch isolierende Dünnschicht sowie zwei zwischen jeweils einer außenliegenden Dünnschicht und der mittigen Dünn- schicht angeordnete Trägerelemente umfasst;
- Fig. 10: einen schematischen Schnitt durch eine sechste Ausführungsform einer Dichtungsanordnung, welche ein Dichtelement mit einer mittigen Dünnschicht und zwei außenliegenden Trägerelementen, die mit jeweils einem der abzudichtenden Bauteile verschweißt sind, umfasst;
- Fig. 11: einen schematischen Schnitt durch eine siebte Ausführungsform einer Dichtungsanordnung, welche ein Dichtelement mit einer mittigen Dünnschicht und zwei außenliegenden Trägerelementen umfasst, wobei die Abdichtung zwischen dem Dichtelement und den beiden anliegenden abzudichtenden Bauteilen durch eine ent- sprechend hohe Flächenpressung oder durch eine stoffschlüssige Verbindung zwischen den Trägerelementen und den Bauteilen oder durch einen Diffusionsprozess erzielt wird; und
- Fig. 12: einen schematischen Schnitt durch eine achte Ausführungsform einer Dichtungsanordnung mit einem Dichtelement, das ein mitti- ges Trägerelement und zwei außenliegende elektrisch isolierende Dünnschichten umfasst, wobei die Abdichtung zwischen dem Dichtelement und den beiden abzudichtenden Bauteilen durch eine chemische Reaktion des Materials der Dünnschichten mit dem Material der beiden angrenzenden, abzudichtenden Bauteile erzielt wird.

Gleiche oder funktional äquivalente Elemente sind in allen Figuren mit denselben Bezugszeichen bezeichnet.

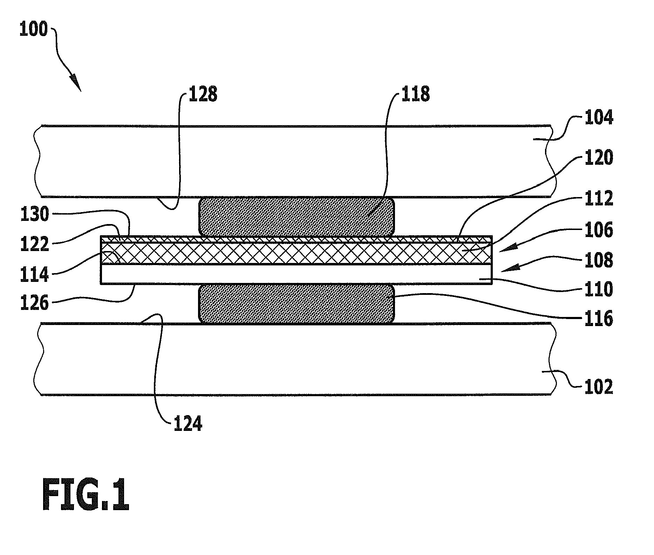

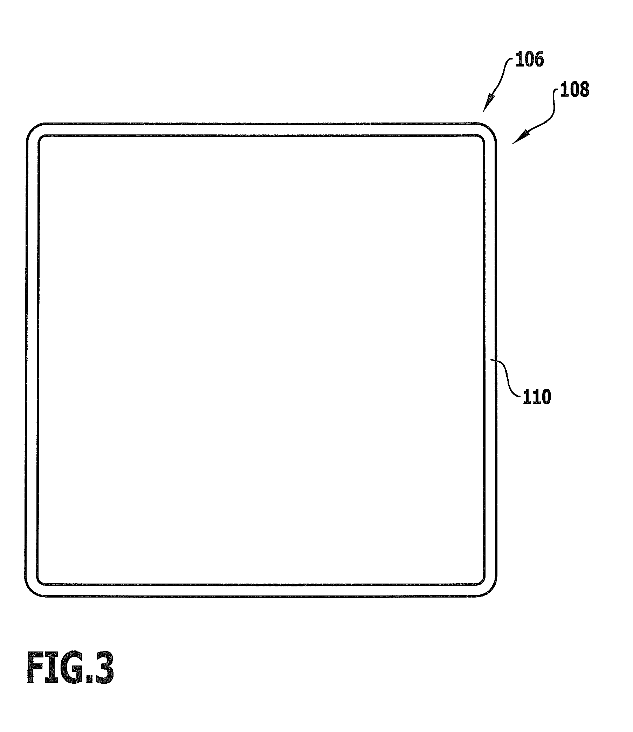

Ein Verfahren zur Herstellung der in Fig. 1 dargestellten ersten Ausführungsform einer als Ganzes mit 100 bezeichneten Dichtungsanordnung zum Abdichten zwischen einem metallischen ersten Bauteil 102 und einem metallischen zweiten Bauteil 104 eines Brennstoffzellenstacks mittels eines zwischen den Bauteilen 102 und 104 angeordneten, bei der Betriebstemperatur des Brennstoffzellenstacks elektrisch isolierenden Dichtelements 106 in Form eines im Wesentlichen rechteckigen Dichtrahmens 108 (siehe Fig. 3), der ein metallisches Trägerelement 110 und eine an dem Trägerelement 110 anhaftende, elektrisch isolierende, aus Glasmaterial und/oder Keramikmaterial gebildete elektrisch isolierende Dünnschicht 112 umfasst, umfasst folgende Verfahrensschritte:
- Bereitstellen eines von den abzudichtenden Bauteilen 102 und 104 verschiedenen Trägerelements 110 durch Heraustrennen des Trägerelements 110 in der Form eines ringförmig geschlossenen, ungefähr rechteckigen Rahmens (siehe Fig. 3) aus einem Blech eines metallischen Ausgangsmaterials, beispielsweise durch Ausstanzen oder Ausschneiden;
- Erzeugen der Dünnschicht 112, welche ein Glasmaterial und/oder ein Keramikmaterial umfasst, durch zumindest teilweises Eintauchen des Trägerelements 110 in ein flüssiges Ausgangsmaterial und/oder durch Aufspritzen eines flüssigen Ausgangsmaterials auf zumindest einen Teil einer Oberfläche 114 des Trägerelements 110;
- Verlöten des aus dem Trägerelement 110 mit der daran haftenden Dünnschicht 112 gebildeten Dichtelements 106 mit dem ersten abzudichtenden Bauteil 102 mittels einer ersten Lotschicht 116 und mit dem zweiten abzudichtenden Bauteil 104 mittels einer zweiten Lotschicht 118, wobei die erste Lotschicht 116 und die zweite Lotschicht 118 aus einem metallischen Lotmaterial gebildet sind.

Bei dem ersten Bauteil 102 kann es sich beispielsweise um ein Gehäuseoberteil eines Gehäuses einer Brennstoffzelleneinheit handeln, und bei dem zweiten Bauteil 104 kann es sich um ein Gehäuseunterteil einer in einer Stapelrichtung eines Brennstoffzellenstacks auf die erste Brennstoffzelleneinheit folgenden weiteren Brennstoffzelleneinheit handeln.

Solche Brennstoffzelleneinheiten mit zweiteiligen Gehäusen, die aus einem Gehäuseunterteil und einem Gehäuseoberteil zusammengesetzt sind, sind beispielsweise in der DE 103 58 458 A1 offenbart, auf welche diesbezüglich Bezug genommen wird und welche ausdrücklich durch Inbezugnahme zum Bestandteil dieser Anmeldung gemacht wird.

Das erste Bauteil 102 und/oder das zweite Bauteil 104 können insbesondere in der jeweiligen Brennstoffzelleneinheit als Bipolarplatte oder Interkonnektor dienen.

Beide Bauteile 102 und 104 können insbesondere einen Chromoxid bildenden Stahl umfassen.

Die beiden Bauteile 102 und 104 sind beispielsweise aus einem ferritischen, Chromoxid bildenden Edelstahl gebildet, beispielsweise aus dem Edelstahl Crofer22APU, welcher folgende Zusammensetzung aufweist:
22,2 Gewichtsprozent Cr; 0,46 Gewichtsprozent Mn; 0,06 Gewichtsprozent Ti;
0,07 Gewichtsprozent La; 0,002 Gewichtsprozent C; 0,02 Gewichtsprozent Al;
0,03 Gewichtsprozent Si; 0,004 Gewichtsprozent N; 0,02 Gewichtsprozent Ni; Rest Eisen.

Der Stahl mit der Bezeichnung Crofer22APU, der von dem Hersteller ThyssenKrupp AG, Deutschland, angeboten wird, hat die Werkstoffbezeichnungen 1.4760 nach EN und S44535 nach UNS.

Für die Herstellung der Dünnschicht 112 an dem Trägerelement 110 wird ein flüssiges Ausgangsmaterial hergestellt, das ein Glasmaterial und/oder ein Keramikmaterial enthält.

Das Ausgangsmaterial kann beispielsweise ein Glasmaterial aus einem der folgenden Systeme sein:
a) BaO - CaO - SiO₂;
b) BaO - CaO - SiO₂ - Al₂O₃;
c) BaO - CaO - SiO₂ - Al₂O₃ - B₂O₃.

Einem solchen Glasmaterial können insbesondere bei der Betriebstemperatur des Brennstoffzellenstacks elektrisch isolierende Materialien, beispielsweise Al₂O₃, Al-Mg-Spinell, Yttrium-stabilisiertes Zirkoniumdioxid, Forsterit (Mg-Si-Spinell) und/oder MgO, beigemischt werden.

Die Beimischung der vorstehend genannten Materialien zu dem Glasmaterial kann in jedem beliebigen Gewichtsverhältnis erfolgen.

Das beigemischte Material kann in beliebiger Form vorliegen, beispielsweise als Pulver oder als Fasern.

Das Glasmaterial, das Keramikmaterial und/oder die Mischung aus Glasmaterial und Keramikmaterial, woraus das Ausgangsmaterial für die Herstellung der Dünnschicht gebildet werden soll, wird fein gemahlen und geschmolzen. Die glühend heiße Schmelze wird in Wasser gegossen, abgeschreckt, und die dabei entstehende körnige glasartige Fritte wird wieder fein gemahlen. Beim Mahlen können 30-40 Gewichtsprozent Wasser, Ton und Quarzmehl zugesetzt werden.

Die so entstehende Suspension kann einige Tage ruhen, bevor sie weiterverwendet wird.

Das mit der Dünnschicht 112 zu versehende Trägerelement 110 wird ausgeglüht, in Säure geätzt, mit Laugen neutralisiert und gewaschen.

Anschließend wird das Trägerelement 110 in das in der vorstehenden Weise als Suspension ausgebildete flüssige Ausgangsmaterial eingetaucht und wieder aus demselben herausgezogen, so dass ein Teil des Ausgangsmaterials als Dünnschicht an der zu beschichtenden Oberfläche 114 des Trägerelements 110 anhaftet.

Alternativ oder ergänzend hierzu kann das flüssige Ausgangsmaterial in Form einer Suspension auch auf die zu beschichtende Oberfläche 114 des Trägerelements 110 aufgespritzt werden, um die Dünnschicht 112 auszubilden.

Bei einer anderen, alternativen Ausführungsform des Verfahrens zur Herstellung der Dünnschicht 112 wird das flüssige Ausgangsmaterial nicht in Form einer Suspension hergestellt, sondern in Form einer Schmelze.

Hierzu wird das Glasmaterial, das Keramikmaterial oder die Mischung aus Glasmaterial und Keramikmaterial, aus welcher das Ausgangsmaterial gebildet werden soll, lediglich aufgeschmolzen, und das Trägerelement 110 wird in die Schmelze eingetaucht und wieder aus der Schmelze entnommen, wodurch ein Teil des flüssigen Ausgangsmaterials an der zu beschichtenden Oberfläche 114 des Trägerelements 110 haften bleibt.

Alternativ oder ergänzend hierzu kann das flüssige Ausgangsmaterial in Form einer Schmelze auch auf die zu beschichtende Oberfläche 114 des Trägerelements 110 aufgespritzt werden, um die Dünnschicht 112 auszubilden.

Nach dem Auftragen des flüssigen Ausgangsmaterials durch Eintauchen des zu beschichtenden Trägerelements 110 in eine Suspension, durch Aufspritzen einer Suspension auf das Trägerelement 110, durch Eintauchen des zu beschichtenden Trägerelements 110 in eine Schmelze des Ausgangsmaterials und/oder durch Aufspritzen einer Schmelze des Ausgangsmaterials auf das zu beschichtende Trägerelement 110 erfolgt eine Wärmebehandlung der durch Anhaften des Ausgangsmaterials an dem zu beschichtenden Trägerelement 110 gebildeten Schicht aus dem Ausgangsmaterial.

Eine solche Wärmebehandlung kann beispielsweise wie folgt durchgeführt werden:
- Erhitzen des Trägerelements 110 mit dem daran haftenden Ausgangsmaterial mit einer Temperatursteigerungsrate von ungefähr 1 K/min bis ungefähr 10 K/min, vorzugsweise von ungefähr 3 K/min bis ungefähr 5 K/min, auf eine Temperatur im Bereich von ungefähr 100°C bis ungefähr 500°C;
- Halten der Temperatur von ungefähr 100°C bis ungefähr 500°C während eines Haltezeitraums von ungefähr 1 Stunde bis ungefähr 10 Stunden, wodurch gegebenenfalls vorhandene Lösungsmittel oder Bindemittel ausgebrannt werden;
- weiteres Erhitzen des Trägerelements 110 mit der anhaftenden Beschichtung mit einer Temperatursteigerungsrate von ungefähr 1 K/min bis ungefähr 10 K/min, vorzugsweise von ungefähr 3 K/min bis ungefähr 5 K/min, auf eine Temperatur im Bereich von ungefähr 600°C bis ungefähr 1.200°C, vorzugsweise im Bereich von ungefähr 850°C bis ungefähr 1.000°C;
- Halten der Temperatur von ungefähr 600°C bis ungefähr 1.200°C, vorzugsweise der Temperatur von ungefähr 850°C bis ungefähr 1.000°C, während eines Haltezeitraums von bis zu 100 Stunden, vorzugsweise von ungefähr 1 Stunde bis ungefähr 10 Stunden;
- Abkühlen des Trägerelements 110 und der daran anhaftenden Beschichtung mit einer Temperatursenkungsrate von höchstens ungefähr 10 K/min, vorzugsweise von höchstens ungefähr 5 K/min, auf eine Endtemperatur von ungefähr 20°C.

Insbesondere wenn als Ausgangsmaterial ein Glasmaterial verwendet wird, kann beispielsweise die folgende Wärmebehandlung des Trägerelements 110 mit der daran haftenden Beschichtung aus dem Ausgangsmaterial durchgeführt werden:
- Erhitzen des Trägerelements 110 mit dem daran haftenden Ausgangsmaterial mit einer Temperatursteigerungsrate von weniger als 2 K/min auf eine Temperatur von ungefähr 400°C;
- Halten der Temperatur von ungefähr 400°C während eines Haltezeitraums von ungefähr 30 Minuten;
- weiteres Erhitzen des Trägerelements 110 mit der anhaftenden Beschichtung mit einer Temperatursteigerungsrate von weniger als 20 K/min auf eine Temperatur von ungefähr 900°C;
- Halten der Temperatur von ungefähr 900°C während eines Haltezeitraums von ungefähr 60 Minuten;
- Abkühlen des Trägerelements 110 mit der daran haftenden Beschichtung mit einer Temperatursenkungsrate von weniger als 20 K/min auf eine Temperatur von ungefähr 850°C;
- Halten der Temperatur von ungefähr 850°C während eines Haltezeitraums von ungefähr 420 Minuten;
- Abkühlen des Trägerelements 110 und der daran anhaftenden Beschichtung mit einer Temperatursenkungsrate von weniger als 20 K/min auf eine Endtemperatur von ungefähr 20°C.

Durch die Beschichtung des Trägerelements 110 mit dem flüssigen Ausgangsmaterial und der anschließenden Wärmebehandlung wird eine fest an dem Trägerelement 110 anhaftende, bei der Betriebstemperatur der Brennstoffzelleneinheit von beispielsweise 800°C elektrisch isolierende Dünnschicht 112 erzeugt, deren Dicke höchstens ungefähr 100 µm, vorzugsweise höchstens ungefähr 50 µm, beträgt.

Die Mindestdicke der Dünnschicht 112 beträgt, um eine ausreichende elektrische Isolationswirkung zu gewährleisten, mindestens ungefähr 0,5 µm, vorzugsweise mindestens ungefähr 5 µm.

Durch die vorstehend beschriebene Wärmebehandlung der Beschichtung aus dem Glasmaterial wird das Glasmaterial aufgeschmolzen und teilweise kristallisiert.

Das flüssige Ausgangsmaterial, aus dem die Dünnschicht 112 gebildet wird, kann ferner in Bezug auf das Ausgangsmaterial inerte Keramikpartikel umfassen, die innerhalb der Dünnschicht 112 als Abstandshalter dienen, welche eine Mindestdicke der Dünnschicht 112 über die gesamte Breite der Dünnschicht 112 hinweg gewährleisten, so dass die Dicke der Dünnschicht 112 über deren gesamte Fläche hinweg mit hoher Genauigkeit eingestellt werden kann.

Die Keramikpartikel umfassen vorzugsweise ein Oxidkeramikmaterial.

Das Oxidkeramikmaterial kann insbesondere ein Metalloxidmaterial umfassen, wobei das Metalloxidmaterial als Metallkationen beispielsweise Al, Zr und/oder Mg enthalten kann.

Der mittlere Durchmesser der Keramikpartikel in der Dünnschicht 112 liegt vorzugsweise bei ungefähr 10 µm bis ungefähr 100 µm.

Der Gewichtsanteil der Keramikpartikel an der Dünnschicht 112 beträgt vorzugsweise höchstens 10 Gewichtsprozent, insbesondere höchstens 3 Gewichtsprozent.

Bei Verwendung eines Glasmaterials kann beispielsweise ein Anteil von 3 Gewichtsprozent Keramikpartikeln aus ZrO₂ als Abstandshalter verwendet werden, wobei der mittlere Durchmesser der ZrO₂-Partikel bei ungefähr 40 µm liegt.

Die als Abstandshalter dienenden Keramikpartikel bleiben fest und formstabil, während das Ausgangsmaterial für das Aufspritzen auf das zu beschichtende Trägerelement 110 bzw. für das Eintauchen des zu beschichtenden Trägerelements 110 in das Ausgangsmaterial in den flüssigen Zustand überführt wird.

Um die mechanische Festigkeit der Lotverbindung zwischen der Dünnschicht 112 und dem zweiten abzudichtenden Bauteil 104 zu steigern, ist es günstig, wenn der Benetzungswinkel des Lotmaterials an der freien Oberfläche 120 der Dünnschicht 112 gesenkt wird.

Dies kann erreicht werden, indem auf der Dünnschicht 112 eine Benetzungswinkelbegrenzungsschicht 122 erzeugt wird.

Eine solche Benetzungswinkelbegrenzungsschicht 122 umfasst vorzugsweise ein Oxidkeramikmaterial, wobei das Oxidkeramikmaterial beispielsweise Kupferoxid, Aluminiumoxid, Titanoxid, Zirkoniumoxid und/oder Yttrium-stabilisiertes Zirkoniumoxid enthalten kann.

Vorzugsweise wird die Benetzungswinkelbegrenzungsschicht aus einer CuO-Paste erzeugt.

Hierzu wird die freie Oberfläche 120 der Dünnschicht 112, beispielsweise mittels eines Dispensers, mit dem Oxidkeramikmaterial beschichtet, also beispielsweise mit der CuO-Paste, und anschließend das Dichtelement 106 aus dem Trägerelement 110, der Dünnschicht 112 und der Benetzungswinkelbegrenzungsschicht 122 aus Oxidkeramikmaterial einer Wärmebehandlung unterzogen, in deren Verlauf die genannten Elemente auf eine Temperatur von ungefähr 850°C bis ungefähr 950°C erwärmt werden, wobei die Benetzungswinkelbegrenzungsschicht versintert und an die Dünnschicht 112 ansintert.

Anschließend wird das mit der Dünnschicht 112 und (wahlweise) mit der Benetzungswinkelbegrenzungsschicht 122 versehene Dichtelement 106 mittels eines metallischen Lotes sowohl mit dem ersten Bauteil 102 als auch mit dem zweiten Bauteil 104 verlötet.

Während des Lötvorgangs wird das Lotmaterial verflüssigt und ein Anpressdruck auf die mit dem Dichtelement 106 zu verlötenden Bauteile 102 und 104 ausgeübt.

Geeignete metallische Lotmaterialien zur Erzeugung der Lotschichten 116 und 118 sind beispielsweise ein Nickelbasislot, ein Kupferbasislot oder ein Silberbasislot.

Geeignete Lotmaterialien sind insbesondere die folgenden:
- das Nickelbasislot mit der Bezeichnung Ni 102 gemäß der DIN EN 1044, mit der folgenden Zusammensetzung: 10 Gewichtsprozent Cr; 4,5 Gewichtsprozent Si; 3,1 Gewichtsprozent B; 3,0 Gewichtsprozent Fe; weniger als 0,06 Gewichtsprozent C; weniger als 0,02 Gewichtsprozent P; Rest Ni.
- das Kupferbasislot mit der Bezeichnung CU 202 gemäß der DIN EN 1044, mit der folgenden Zusammensetzung: 12 Gewichtsprozent Sn; 0,2 Gewichtsprozent P; Rest Cu.
- das Silberbasislot mit der Bezeichnung Ag4CuO, mit der folgenden Zusammensetzung: 96 mol-% Ag; 4 mol-% CuO.

Zur Erzeugung der ersten Lotschicht 116 zwischen dem Dichtelement 106 und dem ersten abzudichtenden Bauteil 102 kann das metallische Lotmaterial auf die freie Oberfläche 124 des ersten Bauteils 102 oder auf die freie Oberfläche 126 des Trägerelements 110 des Dichtelements 106 aufgebracht und/oder (beispielsweise in Form einer Lötfolie) zwischen das erste Bauteil 102 und das Dichtelement 106 eingebracht werden.

Das für die Erzeugung der zweiten Lotschicht 118 benötigte metallische Lotmaterial kann auf die freie Oberfläche 128 des zweiten Bauteils 104 oder auf die freie Oberfläche der Dünnschicht 112 bzw., falls vorhanden, auf die freie Oberfläche 130 der Benetzungswinkelbegrenzungsschicht 122 auf der Dünnschicht 112 aufgebracht und/oder (beispielsweise in Form einer Lötfolie) zwischen das zweite Bauteil 104 und das Dichtelement 106 eingebracht werden.

Das Aufbringen des Lotmaterials kann mittels eines Dispensers, in einem Musterdruckverfahren (insbesondere in einem Siebdruckverfahren) oder galvanisch erfolgen.

Die Verlötung erfolgt in einem Ofen unter Erwärmung auf eine Löttemperatur im Bereich von ungefähr 970°C bis ungefähr 1.000°C.

Damit ist das Verfahren zur Herstellung einer elektrisch isolierenden Dichtungsanordnung 100 zum Abdichten zwischen den zwei Bauteilen 102 und 104 des Brennstoffzellenstacks abgeschlossen.

Die in Fig. 1 dargestellte erste Ausführungsform einer Dichtungsanordnung 100, bei welcher die Dünnschicht 112 des Dichtelements 106 direkt oder gegebenenfalls unter Zwischenschaltung einer keramischen Benetzungswinkelbegrenzungsschicht mit dem zweiten Bauteil 104 verlötet wird, bietet den Vorteil einer einfachen und kostengünstigen Herstellung.

Auftretende Scherkräfte beim Thermozyklieren des Brennstoffzellenstacks können bei dieser Dichtungsanordnung über das duktile Verhalten des metallischen Lotes in der Lotschicht 118 ausgeglichen werden.

Das metallische Lot aus der Lotschicht 118 kann aber unter Umständen mit der elektrisch isolierenden Dünnschicht 112 bzw. mit der Benetzungswinkelbegrenzungsschicht 122 reagieren, was zur Folge haben kann, dass die elektrische Isolationswirkung der Dünnschicht 112 verloren geht oder der Verbund aus der Dünnschicht 112 und der Lotschicht 118 versprödet und somit keine Scherkräfte kompensieren kann.

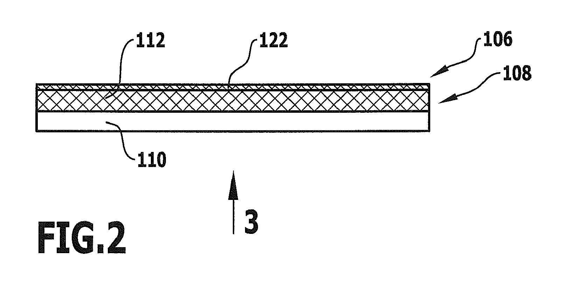

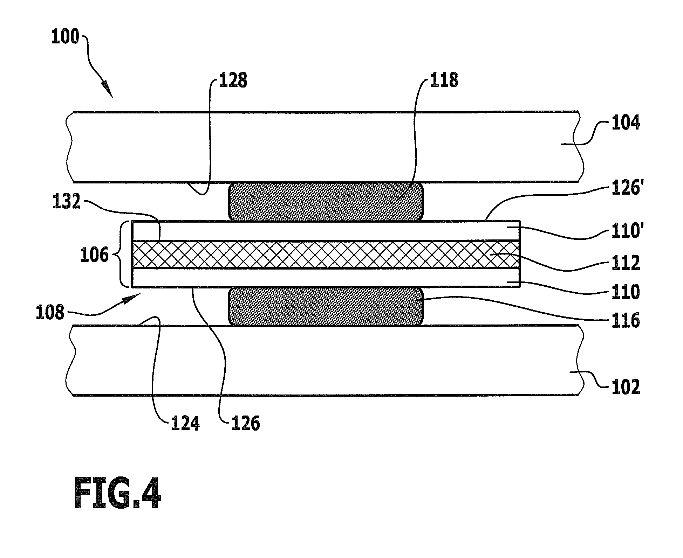

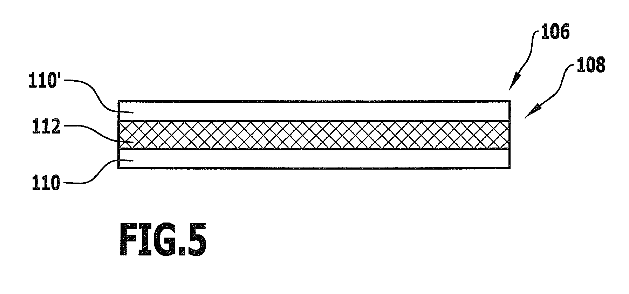

Eine in den Fig. 4 und 5 dargestellte zweite Ausführungsform der Dichtungsanordnung 100 unterscheidet sich von der in den Fig. 1 bis 3 dargestellten ersten Ausführungsform dadurch, dass die elektrisch isolierende Dünnschicht 112 des Dichtelements 106 nicht unmittelbar oder über eine keramische Benetzungswinkelbegrenzungsschicht 122 an die Lotschicht 118 angrenzt, sondern stattdessen ein zweites Trägerelement 110' aus einem metallischen Material, insbesondere aus einem Stahlmaterial, zwischen der Dünnschicht 112 und der Lotschicht 118 angeordnet ist.

Das zweite Trägerelement 110' kann ebenso wie das erste Trägerelement 110 insbesondere aus demselben Stahlmaterial gebildet sein wie das erste Bauteil 102 und/oder das zweite Bauteil 104.

Dadurch, dass bei der zweiten Ausführungsform der Dichtungsanordnung 100 die Dünnschicht 112 des Dichtelements 106 durch die Trägerelemente 110 und 110' von den beiden Lotschichten 116 und 118 getrennt ist, können keine abträglichen Wechselwirkungen zwischen dem metallischen Lot der Lotschichten 116 und 118 und dem Material der Dünnschicht 112 (bzw. dem Material einer auf der Dünnschicht 112 angeordneten Benetzungswinkelbegrenzungsschicht) auftreten.

Insbesondere können keine spröden Phasen durch Reaktion des metallischen Lots mit dem Material der Dünnschicht 112 entstehen. Die Duktilität des metallischen Lots der Lotschichten 116 und 118 bleibt daher bei dieser Ausführungsform in jedem Fall erhalten und kann beim Thermozyklieren des Brennstoffzellenstacks auftretende Scherkräfte kompensieren.

Bei der Herstellung der zweiten Ausführungsform der Dichtungsanordnung 100 gemäß den Fig. 4 und 5 wird wie folgt vorgegangen:
An dem metallischen ersten Trägerelement 110 wird durch Eintauchen in ein flüssiges Ausgangsmaterial und/oder durch Aufspritzen eines flüssigen Ausgangsmaterials die Dünnschicht 112 erzeugt.

Das metallische zweite Trägerelement 110' wird mit der freien Oberfläche 132 der Dünnschicht 112 in Kontakt gebracht.

Das erste Trägerelement 110, das zweite Trägerelement 110' und die dazwischen angeordnete Dünnschicht 112 werden in einen Sinterofen eingebracht und auf eine Sintertemperatur erwärmt, so dass das zweite Trägerelement 110' durch Versinterung mit der Dünnschicht 112 fest verbunden wird.

Die Wärmebehandlung für die Versinterung des zweiten Trägerelements 110' mit der Dünnschicht 112 kann unter einer Flächenpressung von ungefähr 1 N/cm² bis ungefähr 100 N/cm² erfolgen, mit welcher das zweite Trägerelement 110' und die Dünnschicht 112 während des Sintervorgangs gegeneinander gepresst werden.

Die Wärmebehandlung zum Versintern des zweiten Trägerelements 110' mit der Dünnschicht 112 kann beispielsweise wie folgt durchgeführt werden:
- Erhitzen des ersten Trägerelements 110 mit der daran angeordneten Dünnschicht 112 und dem daran anliegenden zweiten Trägerelement 110' mit einer Temperatursteigerungsrate von ungefähr 1 K/min bis ungefähr 10 K/min, vorzugsweise von ungefähr 3 K/min bis ungefähr 5 K/min, auf eine Temperatur im Bereich von ungefähr 100°C bis ungefähr 500°C;
- Halten der Temperatur von ungefähr 100°C bis ungefähr 500°C während eines Haltezeitraums von ungefähr 1 Stunde bis ungefähr 10 Stunden, wodurch gegebenenfalls vorhandene Lösungsmittel oder Bindemittel ausgebrannt werden;
- weiteres Erhitzen des ersten Trägerelements 110, der Dünnschicht 112 und des daran anliegenden zweiten Trägerelements 110' mit einer Temperatursteigerungsrate von ungefähr 1 K/min bis ungefähr 10 K/min, vorzugsweise von ungefähr 3 K/min bis ungefähr 5 K/min, auf eine Temperatur im Bereich von ungefähr 600°C bis ungefähr 1.200 C, vorzugsweise im Bereich von ungefähr 850°C bis ungefähr 1.000°C;
- Halten der Temperatur von ungefähr 600°C bis ungefähr 1.200°C, vorzugsweise der Temperatur von ungefähr 850°C bis ungefähr 1.000°C, während eines Haltezeitraums von bis zu 100 Stunden, vorzugsweise von ungefähr 1 Stunde bis ungefähr 10 Stunden;
- Abkühlen des aus dem ersten Trägerelement 110, dem zweiten Trägerelement 110' und der beide Trägerelemente miteinander verbindenden Dünnschicht 112 gebildeten Dichtelements 106 mit einer Temperatursenkungsrate von höchstens ungefähr 10 K/min, vorzugsweise von höchstens ungefähr 5 K/min, auf eine Endtemperatur von ungefähr 20°C.

Anschließend wird ein metallisches Lotmaterial zur Bildung der ersten Lotschicht 116 auf die freie Oberfläche 124 des ersten Bauteils 102 und/oder auf die freie Oberfläche 126 des ersten Trägerelements 110 und/oder zwischen das erste Trägerelement 110 und das erste Bauteil 102 eingebracht, und ein metallisches Lotmaterial zur Bildung der zweiten Lotschicht 118 wird auf die freie Oberfläche 128 des zweiten Bauteils 104 und/oder auf die freie Oberfläche 126' des zweiten Trägerelements 110' und/oder zwischen das zweite Bauteil 104 und das zweite Trägerelement 110' eingebracht, und das Dichtelement 106 wird mit dem ersten Bauteil 102 und mit dem zweiten Bauteil 104 mittels des während der Lötung verflüssigten Lotmaterials, unter Anwendung eines Anpressdrucks, verlötet.

Als Lotmaterial können dabei dieselben Lotmaterialien verwendet werden, die vorstehend im Zusammenhang mit der Herstellung der ersten Ausführungsform der Dichtungsanordnung 100 beschrieben worden sind.

Im Übrigen stimmt die in den Fig. 4 und 5 dargestellte zweite Ausführungsform der Dichtungsanordnung 100 hinsichtlich Aufbau, Funktion und Herstellungsweise mit der in den Fig. 1 bis 3 dargestellten ersten Ausführungsform überein, auf deren vorstehende Beschreibung insoweit Bezug genommen wird.

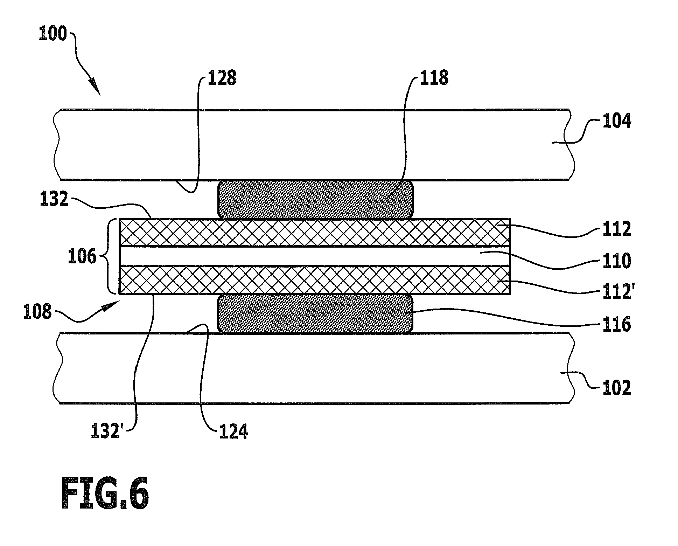

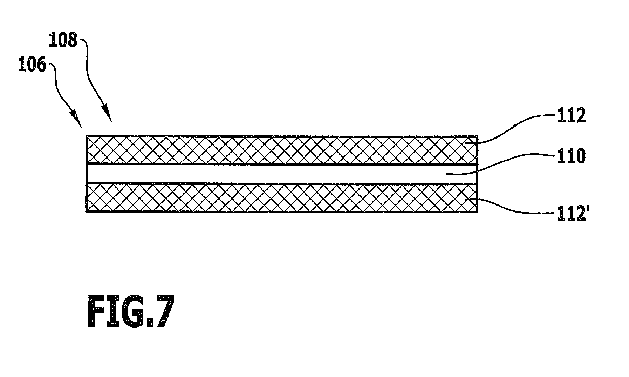

Eine in den Fig. 6 und 7 dargestellte dritte Ausführungsform der Dichtungsanordnung 100 unterscheidet sich von der in den Fig. 1 bis 3 dargestellten ersten Ausführungsform dadurch, dass das Trägerelement 110 des Dichtelements 106 nicht nur einseitig, sondern beidseitig mit jeweils einer Dünnschicht 112 bzw. 112' versehen ist.

Die zweite Dünnschicht 112' ist aus einem bei einer Betriebstemperatur des Brennstoffzellenstacks elektrisch isolierenden Glasmaterial und/oder Keramikmaterial gebildet.

Die zweite Dünnschicht 112' kann insbesondere aus demselben elektrisch isolierenden Material gebildet sein wie die erste Dünnschicht 112.

Ferner können beide Dünnschichten 112 und 112' an ihren freien Oberflächen mit jeweils einer keramischen Begrenzungswinkelbegrenzungsschicht versehen sein, wie dies vorstehend bereits im Zusammenhang mit der einzigen Dünnschicht 112 der in den Fig. 1 bis 3 dargestellten ersten Ausführungsform einer Dichtungsanordnung 100 beschrieben worden ist.

Die in den Fig. 6 und 7 dargestellte dritte Ausführungsform der Dichtungsanordnung 100 bietet durch das Vorhandensein zweier elektrisch isolierender Dünnschichten 112 und 112' den Vorteil einer verbesserten elektrischen Isolationswirkung durch ein zweilagiges Dünnschicht-System.

Bei der Herstellung der dritten Ausführungsform der Dichtungsanordnung 100 gemäß den Fig. 6 und 7 wird wie folgt vorgegangen:
An dem metallischen Trägerelement 110 werden durch Eintauchen in ein flüssiges Ausgangsmaterial und/oder durch Aufspritzen eines flüssigen Ausgangsmaterials beidseitig die erste Dünnschicht 112 bzw. die zweite Dünnschicht 112' erzeugt.

Die beiden Dünnschichten 112 und 112' können ebenso wie bei der ersten Ausführungsform der Dichtungsanordnung 100 einer Wärmebehandlung, unter teilweisem Kristallisieren des gegebenenfalls enthaltenen Glasmaterials, unterzogen werden.

Anschließend kann an den freien Oberflächen 132 bzw. 132' der Dünnschichten 112 bzw. 112' in der vorstehend bereits beschriebenen Weise eine Benetzungswinkelbegrenzungsschicht erzeugt werden.

Darauf wird ein metallisches Lotmaterial zur Bildung der ersten Lotschicht 116 auf die freie Oberfläche 124 des ersten Bauteils 102 und/oder auf die freie Oberfläche 132' der zweiten Dünnschicht 112' aufgetragen und/oder zwischen das erste Bauteil 102 und die zweite Dünnschicht 112' eingebracht, und ein metallisches Lotmaterial zur Bildung der zweiten Lotschicht 118 wird auf die freie Oberfläche 128 des zweiten Bauteils 104 und/oder auf die freie Oberfläche 132 der ersten Dünnschicht 112 aufgetragen und/oder zwischen das zweite Bauteil 104 und die erste Dünnschicht 112 eingebracht, und das metallische erste Bauteil 102 und das metallische zweite Bauteil 104 werden mit den Dünnschichten 112' bzw. 112 mittels des während der Lötung verflüssigten Lotmaterials, unter Anwendung eines Anpressdrucks, verlötet.

Als Lotmaterial können dabei dieselben Lotmaterialien verwendet werden, die vorstehend im Zusammenhang mit der Herstellung der ersten Ausführungsform der Dichtungsanordnung 100 beschrieben worden sind.

Im Übrigen stimmt die in den Fig. 6 und 7 dargestellte dritte Ausführungsform der Dichtungsanordnung 100 hinsichtlich Aufbau, Funktion und Herstellungsweise mit der in den Fig. 1 bis 3 dargestellten ersten Ausführungsform überein, auf deren vorstehende Beschreibung insoweit Bezug genommen wird.

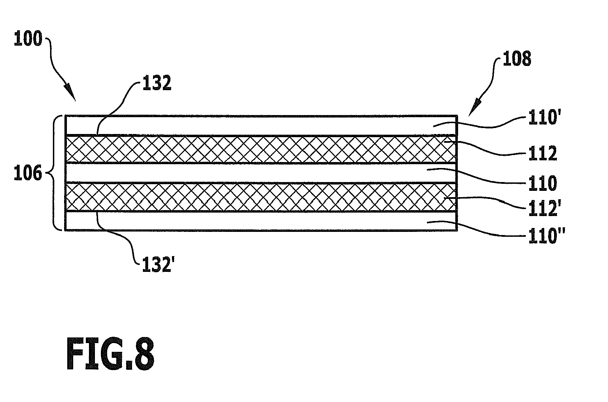

Eine in Fig. 8 dargestellte vierte Ausführungsform der Dichtungsanordnung 100 unterscheidet sich von der in den Fig. 6 und 7 dargestellten dritten Ausführungsform dadurch, dass das Dichtelement 106 neben einem mittigen Trägerelement 110 und den beidseitig daran angeordneten elektrisch isolierenden Dünnschichten 112 und 112' noch zwei außenliegende Trägerelemente 110' und 110" umfasst, welche die Außenflächen des Dichtelements 106 dieser Ausführungsform bilden, so dass die elektrisch isolierenden Dünnschichten 112 und 112' jeweils zwischen einem der außenliegenden Trägerelemente 110' bzw. 110" einerseits und dem mittigen Trägerelement 110 des Dichtelements 106 andererseits angeordnet sind.

Durch das Vorhandensein der außenliegenden Trägerelemente 110' und 110" aus metallischem Material wird trotz des Vorhandenseins zweier elektrisch isolierender Dünnschichten 112, 112', wodurch die elektrische Isolationsfähigkeit des Dichtelements 106 bei der Betriebstemperatur des Brennstoffzellenstacks verbessert wird, erreicht, dass das metallische Lotmaterial der Lotschichten 116 und 118 nicht mit dem Material der Dünnschichten 112 und 112' in Kontakt kommt, so dass keine abträglichen Wechselwirkungen zwischen dem metallischen Lot der Lotschichten 116 und 118 einerseits und dem Material der Dünnschichten 112 bzw. 112' andererseits auftreten.

Bei der Herstellung der vierten Ausführungsform der Dichtungsanordnung 100 gemäß Fig. 8 wird wie folgt vorgegangen:
An dem metallischen mittigen Trägerelement 110 werden durch Eintauchen in ein flüssiges Ausgangsmaterial und/oder durch Aufspritzen eines flüssigen Ausgangsmaterials die beiden Dünnschichten 112 und 112' erzeugt.

Die außenliegenden Trägerelemente 110' und 110" werden mit den freien Oberflächen 132 bzw. 132' der Dünnschichten 112 bzw. 112' in Kontakt gebracht.

Die aus den Trägerelementen 110, 110' und 110" sowie den dazwischen angeordneten Dünnschichten 112 und 112' gebildete Sandwich-Struktur wird in einen Sinterofen eingebracht und auf eine Sintertemperatur erwärmt, so dass die metallischen außenliegenden Trägerelemente 110' und 110" durch Versinterung mit der Dünnschicht 112 bzw. mit der Dünnschicht 112' verbunden werden.

Hierdurch wird ein insgesamt fünfschichtiges Dichtelement 106 erzeugt, welches anschließend mit den beiden abzudichtenden metallischen Bauteilen 102 und 104 verlötet wird, welche in Fig. 8 nicht dargestellt sind.

Diese Verlötung erfolgt in derselben Weise, wie dies vorstehend im Zusammenhang mit der in den Fig. 4 und 5 dargestellten zweiten Ausführungsform der Dichtungsanordnung 100 beschrieben worden ist.

Als Lotmaterial können dabei dieselben Lotmaterialien verwendet werden, die vorstehend im Zusammenhang mit der Herstellung der ersten Ausführungsform der Dichtungsanordnung 100 beschrieben worden sind.

Im Übrigen stimmt die in Fig. 8 dargestellte vierte Ausführungsform der Dichtungsanordnung 100 hinsichtlich Aufbau, Funktion und Herstellungsweise mit der in den Fig. 6 und 7 dargestellten dritten Ausführungsform überein, auf deren vorstehende Beschreibung insoweit Bezug genommen wird.

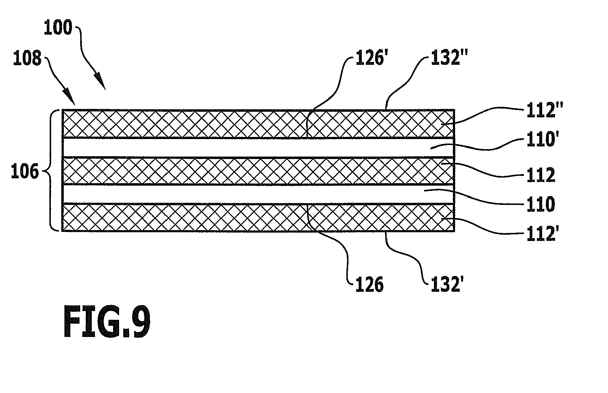

Eine in Fig. 9 dargestellte fünfte Ausführungsform der Dichtungsanordnung 100 unterscheidet sich von der in den Fig. 4 und 5 dargestellten zweiten Ausführungsform dadurch, dass das Dichtelement 106 zusätzlich zu der zwischen den Trägerelementen 110 und 110' angeordneten mittigen Dünnschicht 112 noch weitere außenliegende Dünnschichten 112' bzw. 112" umfasst, welche auf den der mittigen Dünnschicht 112 abgewandten freien Oberflächen der Trägerelemente 110 bzw. 110' angeordnet sind.

Durch das Vorhandensein von insgesamt drei elektrisch isolierenden Dünnschichten 112, 112' und 112" wird bei dieser Ausführungsform der Dichtungsanordnung 100 eine besonders gute elektrische Isolationswirkung bei der Betriebstemperatur des Brennstoffzellenstacks erzielt.

Bei der Herstellung der fünften Ausführungsform der Dichtungsanordnung 100 gemäß Fig. 9 wird wie folgt vorgegangen:
Zunächst wird eine dreischichtige Sandwich-Struktur aus dem ersten Trägerelement 110, dem zweiten Trägerelement 100' und der dazwischen angeordneten Dünnschicht 112 gebildet, wie dies vorstehend im Zusammenhang mit der in den Fig. 4 und 5 dargestellten zweiten Ausführungsform der Dichtungsanordnung 100 beschrieben worden ist.

Daraufhin werden durch Eintauchen dieser Sandwich-Struktur in das flüssige Ausgangsmaterial und/oder durch Aufspritzen des flüssigen Ausgangsmaterials auf die außenliegenden Trägerelemente 110 und 110' die zusätzlichen außenliegenden Dünnschichten 112' und 112" gebildet und einer Wärmebehandlung unterzogen, um eine teilweise Kristallisation von in der jeweiligen Dünnschicht vorhandenem Glasmaterial zu bewirken.

Die freien Oberflächen 132' bzw. 132" der außenliegenden Dünnschichten 112' bzw. 112" können, wie bei der ersten Ausführungsform der Dichtungsanordnung 100, mit einer zusätzlichen keramischen Benetzungswinkelbegrenzungsschicht versehen werden, um den Benetzungswinkel des metallischen Lotmaterials der Lotschichten 116 bzw. 118 zu verringern und dadurch die mechanische Festigkeit der Lotverbindung zu erhöhen.

Anschließend wird das auf diese Weise aus zwei Trägerelementen 110 und 110' sowie drei Dünnschichten 112, 112' und 112" gebildete, fünfschichtige Dichtelement 106 mittels eines metallischen Lotmaterials mit den beiden abzudichtenden Bauteilen 102 und 104 verlötet, wie dies vorstehend bereits im Zusammenhang mit der in den Fig. 6 und 7 dargestellten dritten Ausführungsform der Dichtungsanordnung 100 beschrieben worden ist.

Im Übrigen stimmt die in Fig. 9 dargestellte fünfte Ausführungsform der Dichtungsanordnung 100 hinsichtlich Aufbau, Funktion und Herstellungsweise mit der in den Fig. 4 und 5 dargestellten zweiten Ausführungsform überein, auf deren vorstehende Beschreibung insoweit Bezug genommen wird.

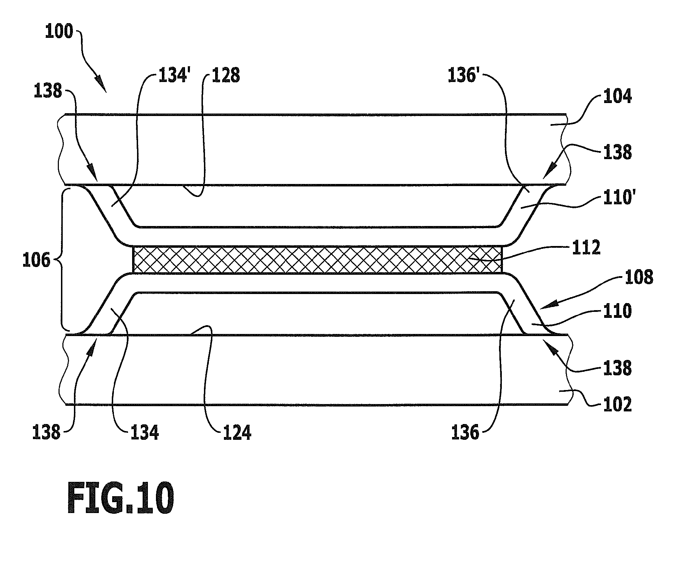

Eine in Fig. 10 dargestellte sechste Ausführungsform der Dichtungsanordnung 100 unterscheidet sich von der in den Fig. 4 und 5 dargestellten zweiten Ausführungsform dadurch, dass die Trägerelemente 110 und 110' des Dichtelements 106 nicht mit den beiden abzudichtenden Bauteilen 102 bzw. 104 verlötet, sondern stattdessen mit diesen Bauteilen verschweißt sind.

Um dies zu ermöglichen, weist jedes der metallischen Trägerelemente 110 und 110' einen zur Innenseite des ringförmig geschlossenen Dichtelements 106 hin über die Dünnschicht 112 überstehenden inneren Randbereich 134 bzw. 134' und einen zu der Außenseite des ringförmigen Dichtelements hin vorstehenden äußeren Randbereich 136 bzw. 136' auf, wobei die inneren Randbereiche 134 und 134' der beiden Trägerelemente 110 und 110' und die äußeren Randbereiche 136 und 136' der beiden Trägerelemente 110 bzw. 110' jeweils voneinander weg gebogen sind und mit ihren der Dünnschicht 112 abgewandten freien Rändern an der freien Oberfläche 124 des ersten Bauteils 102 bzw. an der freien Oberfläche 128 des zweiten Bauteils 104 anliegen und längs dieser freien Ränder mittels Schweißnähten 138, die beispielsweise durch Laserschweißen erzeugt werden können, stoffschlüssig mit dem ersten Bauteil 102 bzw. mit dem zweiten Bauteil 104 verbunden sind.

Durch ein solches Einschweißen des Dichtelements 106 zwischen die beiden abzudichtenden Bauteile 102 und 104 ist die Dichtungsanordnung 100 besonders rasch und einfach herstellbar, wobei längs der Schweißnähte 138 eine besonders zuverlässige, gasdichte Abdichtung zwischen den beiden Bauteilen 102 und 104 einerseits und dem Dichtelement 106 andererseits erzielt wird.

Außerdem ist die Höhe der gekrümmten Randbereiche 134, 134', 136 und 136' der metallischen Trägerelemente 110, 110' bei dieser Ausführungsform innerhalb gewisser Grenzen durch eine Deformierung dieser Randbereiche veränderbar, so dass die Gesamthöhe des Dichtelements 106 beim Thermozyklieren des Brennstoffzellenstacks veränderbar ist, um eine Höhenanpassung des Dichtelements 106 vorzunehmen, welche aufgrund unterschiedlicher thermischer Ausdehnungskoeffizienten anderer Komponenten des Brennstoffzellenstacks, insbesondere der Kathoden-Elektrolyt-Anoden-Einheiten des Brennstoffzellenstacks, erforderlich sein kann.

Im Übrigen stimmt die in Fig. 10 dargestellte sechste Ausführungsform der Dichtungsanordnung 100 hinsichtlich Aufbau, Funktion und Herstellungsweise mit der in den Fig. 4 und 5 dargestellten zweiten Ausführungsform überein, auf deren vorstehende Beschreibung insoweit Bezug genommen wird.

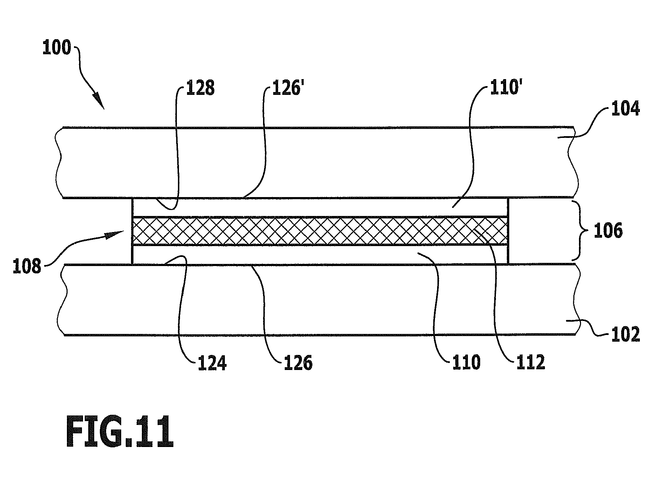

Eine in Fig. 11 dargestellte siebte Ausführungsform der Dichtungsanordnung 100 unterscheidet sich von der in den Fig. 4 und 5 dargestellten zweiten Ausführungsform dadurch, dass die metallischen Trägerelemente 110 und 110' des Dichtelements 106 nicht mit den beiden abzudichtenden Bauteilen 102 und 104 des Brennstoffzellenstacks verlötet sind, sondern stattdessen die Abdichtung zwischen dem Dichtelement 106 und den Bauteilen 102 und 104 dadurch erfolgt, dass das Dichtelement 106 zwischen die beiden Bauteile 102 und 104 so eingebracht wird, dass die freien Oberflächen 126, 126' der außenliegenden Trägerelemente 110 bzw. 110' flächig an der freien Oberfläche 124 des ersten Bauteils 102 bzw. flächig an der freien Oberfläche 128 des zweiten Bauteils 104 anliegen und mittels einer (nicht dargestellten) Verspannungsvorrichtung des Brennstoffzellenstacks die beiden Bauteile 102 und 104 im Betrieb des Brennstoffzellenstacks so gegeneinander verspannt werden, dass durch eine ausreichende Flächenpressung an den Außenseiten des Dichtelements 106 eine gasdichte Abdichtung zwischen dem Dichtelement 106 einerseits und den angrenzenden abzudichtenden Bauteilen 102 und 104 andererseits erzielt wird.

Die Dichtwirkung wird noch verbessert, wenn das metallische Material der außenliegenden Trägerelemente 110, 110' des Dichtelements 106 und/oder das metallische Material der abzudichtenden Bauteile 102 und 104 eine solche Duktilität aufweisen, dass sich die Dichtflächen des Dichtelements 106 und/oder die Dichtflächen der abzudichtenden Bauteile 102, 104, welche an den Dichtflächen des Dichtelements 106 anliegen, bei der Inbetriebnahme des Brennstoffzellenstacks und der Erwärmung auf dessen Betriebstemperatur unter der angewandten Flächenpressung so verformen, dass das Dichtelement 106 im Wesentlichen spaltfrei an den beiden abzudichtenden Bauteilen 102 und 104 anliegt.

Ferner kann vorgesehen sein, dass bei der Erwärmung auf die Betriebstemperatur des Brennstoffzellenstacks (von mindestens 600°C) an der Grenzfläche zwischen den außenliegenden Trägerelementen 110, 110' und den Dichtflächen der Bauteile 102 und 104 Diffusionsvorgänge stattfinden, durch welche die metallischen Trägerelemente 110 und 110' des Dichtelements 106 stoffschlüssig mit dem metallischen Material der abzudichtenden Bauteile 102 und 104 verbunden werden.

Eine solche stoffschlüssige Verbindung zwischen dem Dichtelement 106 und den abzudichtenden Bauteilen 102 und 104 ist besonders leicht erzeugbar, wenn das metallische Material der Trägerelemente 110, 110' und/oder das metallische Material der abzudichtenden Bauteile 102 und 104 Aluminium enthält.

Im Übrigen stimmt die in Fig. 11 dargestellte siebte Ausführungsform der Dichtungsanordnung 100 hinsichtlich Aufbau, Funktion und Herstellungsweise mit der in den Fig. 4 und 5 dargestellten zweiten Ausführungsform überein, auf deren vorstehende Beschreibung insoweit Bezug genommen wird.

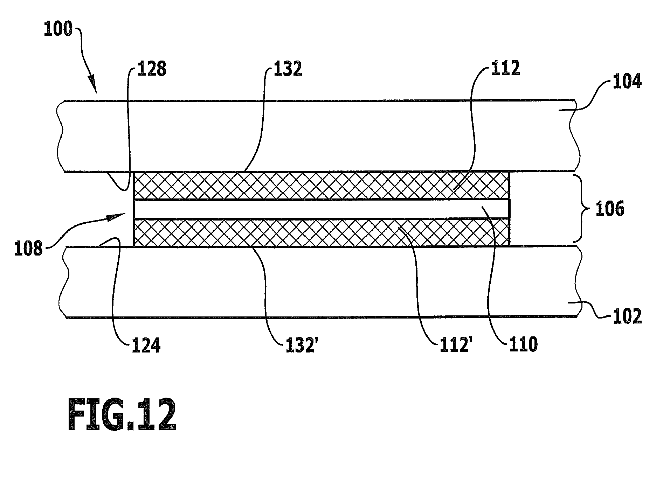

Eine in Fig. 12 dargestellte achte Ausführungsform der Dichtungsanordnung 100 unterscheidet sich von der in den Fig. 6 und 7 dargestellten dritten Ausführungsform dadurch, dass die außenliegenden Dünnschichten 112 und 112' des Dichtelements 106 nicht mit den abzudichtenden Bauteilen 102 und 104 verlötet sind, sondern eine abdichtende Fügung des Dichtelements 106 mit den abzudichtenden Bauteilen 102 und 104 dadurch erzielt wird, dass die außenliegenden Dünnschichten 112 und 112' des Dichtelements 106 mit ihren freien Oberflächen 132 bzw. 132' flächig an der freien Oberfläche 124 des ersten Bauteils 102 bzw. flächig an der freien Oberfläche 128 des zweiten Bauteils 104 anliegen und bei Erwärmung des Brennstoffzellenstacks auf dessen Betriebstemperatur (von mindestens ungefähr 600°C) mit dem Material des metallischen ersten Bauteils 102 und des metallischen zweiten Bauteils 104 reagieren, so dass eine stoffschlüssige Verbindung zwischen dem Dichtelement 106 einerseits und den abzudichtenden Bauteilen 102 und 104 andererseits entsteht, durch welche das Dichtelement 106 gasdicht an den abzudichtenden Bauteilen 102 und 104 festgelegt ist.

Im Übrigen stimmt die in Fig. 12 dargestellte achte Ausführungsform der Dichtungsanordnung 100 hinsichtlich Aufbau, Funktion und Herstellungsweise mit der in den Fig. 6 und 7 dargestellten dritten Ausführungsform überein, auf deren vorstehende Beschreibung insoweit Bezug genommen wird.

## Patentansprüche

1. Verfahren zur Herstellung einer elektrisch isolierenden Dichtungsanordnung (100) zum Abdichten zwischen zwei Bauteilen (102, 104) eines Brennstoffzellenstacks,
umfassend folgende Verfahrensschritte:
- Erzeugen eines Dichtelements (106) durch folgende Verfahrensschritte:
a) Bereitstellen mindestens eines von den abzudichtenden Bauteilen (102, 104) verschiedenen Trägerelements (110, 110', 110");
b) Erzeugen mindestens einer Dünnschicht (112, 112', 112"), welche ein Glasmaterial und/oder ein Keramikmaterial umfasst, durch zumindest teilweises Eintauchen des mindestens einen Trägerelements (110, 110', 110") in ein flüssiges Ausgangsmaterial und/oder durch Aufspritzen eines flüssigen Ausgangsmaterials auf zumindest einen Teil des mindestens einen Trägerelements (110, 110', 110");
- Einbringen des erzeugten Dichtelements (106) zwischen die abzudichtenden Bauteile (102, 104) des Brennstoffzellenstacks.

2. Verfahren nach Anspruch 1, **dadurch gekennzeichnet, dass** ein ringförmig geschlossenes Dichtelement (106) erzeugt wird.

3. Verfahren nach einem der Ansprüche 1 oder 2, **dadurch gekennzeichnet, dass** das Dichtelement (106) an mindestens einem der abzudichtenden Bauteile (102, 104) festgelegt wird.

4. Verfahren nach Anspruch 3, **dadurch gekennzeichnet, dass** das Dichtelement (106) durch Verlötung und/oder durch Verschweißung und/oder durch einen Diffusionsvorgang und/oder durch eine chemische Reaktion an mindestens einem der abzudichtenden Bauteile (102, 104) festgelegt wird.

5. Verfahren nach einem der Ansprüche 1 bis 4, **dadurch gekennzeichnet, dass** mindestens ein Trägerelement (110, 110', 110") aus einem metallischen Material verwendet wird.

6. Verfahren nach einem der Ansprüche 1 bis 5, **dadurch gekennzeichnet, dass** das Dichtelement (106) mit mehreren, durch jeweils ein Trägerelement (110, 110') voneinander getrennten Dünnschichten (112, 112', 112") erzeugt wird.

7. Verfahren nach einem der Ansprüche 1 bis 6, **dadurch gekennzeichnet, dass** das Dichtelement (106) aus mehreren, durch jeweils eine dazwischen liegende Schicht voneinander getrennten Trägerelementen (110, 110', 110") erzeugt wird.

8. Verfahren nach einem der Ansprüche 1 bis 7, **dadurch gekennzeichnet, dass** das Dichtelement (106) so erzeugt wird, dass mindestens eine der im montierten Zustand der Dichtungsanordnung (100) den abzudichtenden Bauteilen (102, 104) zugewandten Außenflächen des Dichtelements (106) durch eine Dünnschicht (112, 112', 112") gebildet wird.

9. Verfahren nach einem der Ansprüche 1 bis 8, **dadurch gekennzeichnet, dass** das Verfahren den folgenden weiteren Verfahrensschritt umfasst:
- Erzeugen mindestens einer Benetzungswinkelbegrenzungsschicht (122) an mindestens einer der im montierten Zustand der Dichtungsanordung (100) den abzudichtenden Bauteilen (102, 104) zugewandten Außenflächen des Dichtelements (106).

10. Verfahren nach Anspruch 9, **dadurch gekennzeichnet, dass** die Benetzungswinkelbegrenzungsschicht (122) direkt an eine Lotschicht (118) angrenzt.

11. Verfahren nach einem der Ansprüche 1 bis 10, **dadurch gekennzeichnet, dass** das Dichtelement (106) so erzeugt wird, dass mindestens eine der im montierten Zustand der Dichtungsanordnung (100) den abzudichtenden Bauteilen (102, 104) zugewandten Außenflächen des Dichtelements (106) durch ein Trägerelement (110, 110', 110") gebildet wird.

12. Verfahren nach einem der Ansprüche 1 bis 11, **dadurch gekennzeichnet, dass** das Verfahren ferner folgenden Verfahrensschritt umfasst:
- Wärmebehandlung mindestens einer erzeugten Dünnschicht (112, 112', 112"), bei welcher das Material der Dünnschicht (112, 112', 112") zumindest teilweise aufgeschmolzen wird und zumindest teilweise kristallisiert.

13. Verfahren nach einem der Ansprüche 1 bis 12, **dadurch gekennzeichnet, dass** mindestens eine erzeugte Dünnschicht (112, 112', 112") Partikel enthält, welche ein Oxidkeramikmaterial umfassen.

14. Verfahren nach Anspruch 13, **dadurch gekennzeichnet, dass** der mittlere Durchmesser der Partikel bei ungefähr 10 µm bis ungefähr 100 µm liegt.

15. Verfahren nach einem der Ansprüche 1 bis 14, **dadurch gekennzeichnet, dass** das Glasmaterial und/oder das Keramikmaterial ein Glas des Systems BaO - CaO - SiO₂, ein Glas des Systems BaO - CaO - SiO₂ - Al₂O₃ und/oder ein Glas des Systems BaO - CaO - SiO₂ - Al₂O₃ - B₂O₃ umfasst.

16. Dichtungsanordnung zum Abdichten zwischen zwei Bauteilen (102, 104) eines Brennstoffzellenstacks, umfassend
ein separat von den Bauteilen (102, 104) hergestelltes und im montierten Zustand der Dichtungsanordnung (100) zwischen den abzudichtenden Bauteilen (102, 104) angeordnetes Dichtelement (106),
das mindestens ein Trägerelement (110, 110', 110") und mindestens eine elektrisch isolierende Dünnschicht (112, 112', 112"), welche ein Glasmaterial und/oder ein Keramikmaterial umfasst und durch zumindest teilweises Eintauchen des Trägerelements (110, 110', 110") in ein flüssiges Ausgangsmaterial und/oder durch Aufspritzen eines flüssigen Ausgangsmaterials auf zumindest einen Teil des Trägerelements (110, 110', 110") erzeugt ist,
umfasst.
